# EUROPEAN PATENT APPLICATION

(11) **EP 3 229 518 A1**
(43) Date of publication of application: **11.10.2017**
(21) Application number: 15871860.1
(22) Date of filing: 10.12.2015
(51) Int. Cl.: H04W 24/04

(54) **FAULT PROCESSING METHOD, DEVICE AND SYSTEM**

(30) Priority: 22.12.2014 CN 201410808867
(71) Applicant: Huawei Technologies Co., Ltd., Longgang District Shenzhen, Guangdong 518129 (CN)
(72) Inventor: ZHANG, Biao, Shenzhen Guangdong 518129 (CN); LUO, Boqiang, Shenzhen Guangdong 518129 (CN)
(74) Representative: Thun, Clemens
(86) International application number: PCT/CN2015/096995
(87) International publication number: WO 2016/101791

(57) **Abstract**

A troubleshooting method, apparatus, and system are provided, by which continuity of a voice service can be ensured and user experience can be improved. The method includes: receiving, by a second SCC AS after a first service centralization and continuity application server SCC AS becomes faulty, an identity that is of an access transfer control function ATCF device accessed by user equipment and that is sent by a home subscriber server HSS, where the second SCC AS is determined by a call session control function CSCF device after the CSCF device detects that the first SCC AS becomes faulty; sending, by the second SCC AS, an identity of the second SCC AS to the ATCF device according to the identity of the ATCF device; and receiving, by the second SCC AS, a handover request that is sent by the ATCF device according to the identity of the second SCC AS.

## Description

This application claims priority to Chinese Patent Application No. 201410808867.X, filed with the Chinese Patent Office on December 22, 2014 and entitled "TROUBLESHOOTING METHOD, APPARATUS, AND SYSTEM", which is incorporated herein by reference in its entirety.

### TECHNICAL FIELD

The present invention relates to the communications field, and more specifically, to a troubleshooting method, apparatus, and system.

### BACKGROUND

At present, a voice communication network has evolved from a circuit switched domain (CS, Circuit Switching Domain) network to a voice over Long Term Evolution (VoLTE, Voice over Long Term Evolution) network. To improve quality of service, a handover service may be provided for user equipment that supports both the CS network and the VoLTE network, so as to ensure continuity of a voice service.

A service centralization and continuity application server (SCC AS, Service Centralization and Continuity Application Server) is a main functional entity that is configured to execute handover processing between the CS network and the VoLTE network. During registration of user equipment, a network side assigns an SCC AS to the user equipment. However, when the user equipment moves from an area covered by the VoLTE network to an area not covered by the VoLTE network and needs to be handed over from the VoLTE network to the CS network, if the SCC AS becomes faulty, handover processing between the CS network and the VoLTE network for the user equipment cannot be implemented, and continuity of a voice service of the user equipment cannot be ensured, thereby severely affecting user experience.

### SUMMARY

Embodiments of the present invention provide a troubleshooting method, apparatus, and system, by which continuity of a voice service can be ensured and user experience can be improved.

According to a first aspect, a troubleshooting method is provided. The method includes: receiving, by a second SCC AS after a first service centralization and continuity application server SCC AS becomes faulty, an identity that is of an access transfer control function ATCF device accessed by user equipment and that is sent by a home subscriber server HSS, where the second SCC AS is determined by a call session control function CSCF device after the CSCF device detects that the first SCC AS becomes faulty; sending, by the second SCC AS, an identity of the second SCC AS to the ATCF device according to the identity of the ATCF device; and receiving, by the second SCC AS, a handover request that is sent by the ATCF device according to the identity of the second SCC AS.

With reference to the first aspect, in a first implementation manner of the first aspect, before the receiving, by a second SCC AS, an identity that is of an ATCF device accessed by user equipment and that is sent by an HSS, the method further includes: sending, by the second SCC AS, a user data request UDR message to the HSS, where the UDR message includes a subscriber identity of the user equipment, where the receiving, by a second SCC AS, an identity that is of an ATCF device accessed by user equipment and that is sent by an HSS includes: receiving, by the second SCC AS, the identity that is of the ATCF device accessed by the user equipment and that is sent by the HSS, where the identity of the ATCF device is sent by the HSS after the HSS determines the ATCF device according to the subscriber identity and information about a mapping relationship between the subscriber identity and the ATCF device.

With reference to the first aspect and the foregoing implementation manner, in a second implementation manner of the first aspect, before the receiving, by a second SCC AS, an identity that is of an ATCF device accessed by user equipment and that is sent by an HSS, the method further includes: sending, by the second SCC AS, a UDR message to the HSS, where the UDR message includes an identity of the first SCC AS, where the receiving, by a second SCC AS, an identity that is of an ATCF device accessed by user equipment and that is sent by an HSS includes: receiving, by the second SCC AS, the identity that is of the ATCF device accessed by the user equipment and that is sent by the HSS, where the identity of the ATCF device is sent by the HSS after the HSS determines the ATCF device according to the identity of the first SCC AS and information about a mapping relationship between the identity of the first SCC AS and the ATCF device.

With reference to the first aspect and the foregoing implementation manners, in a third implementation manner of the first aspect, before the receiving, by a second SCC AS, an identity that is of an ATCF device accessed by user equipment and that is sent by an HSS, the method further includes: receiving, by the second SCC AS, a notification message that is used to instruct to replace the first SCC AS with the second SCC AS and that is sent by the CSCF device, where the sending, by the second SCC AS, a UDR message to the HSS includes: sending, by the second SCC AS, the UDR message to the HSS according to the notification message.

With reference to the first aspect and the foregoing implementation manners, in a fourth implementation manner of the first aspect, the receiving, by a second SCC AS, an identity that is of an ATCF device accessed by user equipment and that is sent by an HSS includes: receiving, by the second SCC AS, a user data answer UDA message sent by the HSS, where the UDA message includes the identity of the ATCF device and user data of the user equipment.

With reference to the first aspect and the foregoing implementation manners, in a fifth implementation manner of the first aspect, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

According to a second aspect, a troubleshooting method is provided. The method includes: receiving and storing, by a home subscriber server HSS, an identity that is of an access transfer control function ATCF device accessed by user equipment and that is sent by a first service centralization and continuity application server SCC AS; receiving, by the HSS, a request message that is used to instruct to query the identity of the ATCF and that is sent by a call session control function CSCF device; querying, by the HSS, the identity of the ATCF device according to the request message; and sending, by the HSS, the identity of the ATCF device to a second SCC AS, so that the second SCC AS sends an identity of the second SCC AS to the ATCF device according to the identity of the ATCF device, where the second SCC AS is determined by the CSCF device after the CSCF device detects that the first SCC AS becomes faulty.

With reference to the second aspect, in a first implementation manner of the second aspect, the receiving and storing, by an HSS, an identity that is of an access transfer control function ATCF device accessed by user equipment and that is sent by a first SCC AS includes: receiving, by the HSS, the identity that is of the access transfer control function ATCF device accessed by the user equipment and that is sent by the first SCC AS and a subscriber identity of the user equipment; and storing a mapping relationship between the subscriber identity and the identity of the ATCF device, where the receiving, by the HSS, a request message that is used to instruct to query the identity of the ATCF and that is sent by a CSCF device includes: receiving, by the HSS, the request message that is used to instruct to query the identity of the ATCF and that is sent by the CSCF device, where the request message includes the subscriber identity of the user equipment; and the querying, by the HSS, the identity of the ATCF device according to the request message includes: determining, by the HSS, the ATCF device and the identity of the ATCF device according to the subscriber identity and information about a mapping relationship between the subscriber identity and the ATCF device.

With reference to the second aspect and the foregoing implementation manner, in a second implementation manner of the second aspect, the receiving and storing, by an HSS, an identity that is of an access transfer control function ATCF device accessed by user equipment and that is sent by a first SCC AS includes: receiving, by the HSS, the identity that is of the access transfer control function ATCF device accessed by the user equipment and that is sent by the first SCC AS and an identity of the first SCC AS; and storing a mapping relationship between the identity of the first SCC AS and the identity of the ATCF device, where the receiving, by the HSS, a request message that is used to instruct to query the identity of the ATCF and that is sent by a CSCF device includes: receiving, by the HSS, the request message that is used to instruct to query the identity of the ATCF and that is sent by the CSCF device, where the request message includes the identity of the first SCC AS; and the querying, by the HSS, the identity of the ATCF device according to the request message includes: determining, by the HSS, the ATCF device and the identity of the ATCF device according to the identity of the first SCC AS and information about a mapping relationship between the identity of the first SCC AS and the ATCF device.

With reference to the second aspect and the foregoing implementation manners, in a third implementation manner of the second aspect, the receiving, by the HSS, a request message that is used to instruct to query the identity of the ATCF and that is sent by a CSCF device includes: receiving, by the HSS, the request message that is used to instruct to query the identity of the ATCF and that is sent by the CSCF device by using the second SCC AS.

With reference to the second aspect and the foregoing implementation manners, in a fourth implementation manner of the second aspect, the receiving, by the HSS, a request message that is used to instruct to query the identity of the ATCF and that is sent by a CSCF device includes: receiving, by the HSS, the request message that is used to instruct to query the identity of the ATCF and that is sent by the CSCF device, where the request message includes the identity of the second SCC AS, where the sending, by the HSS, the identity of the ATCF device to a second SCC AS includes: sending, by the HSS, the identity of the ATCF device to the second SCC AS according to the identity of the second SCC AS.

With reference to the second aspect and the foregoing implementation manners, in a fifth implementation manner of the second aspect, the sending, by the HSS, the identity of the ATCF device to a second SCC AS includes: sending, by the HSS, a user data answer UDA message to the second SCC AS, where the UDA message includes the identity of the ATCF device and user data of the user equipment.

With reference to the second aspect and the foregoing implementation manners, in a sixth implementation manner of the second aspect, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

According to a third aspect, a troubleshooting method is provided. The method includes: receiving and storing, by a home subscriber server HSS, an identity that is of an access transfer control function ATCF device accessed by user equipment and that is sent by a first service centralization and continuity application server SCC AS; determining a second SCC AS after a call session control function CSCF device detects that the first SCC AS becomes faulty, and sending, by the CSCF device, a request message that is used to instruct to query the identity of the ATCF device to the HSS; sending, by the HSS, the identity of the ATCF device to the CSCF device according to the request message; sending, by the CSCF device, an identity of the second SCC AS to the ATCF device according to the identity of the ATCF device; receiving, by the CSCF device, a handover request that is sent by the ATCF device according to the identity of the second SCC AS, where the handover request carries the identity of the second SCC AS; and forwarding, by the CSCF device, the handover request to the second SCC AS according to the identity of the second SCC AS.

With reference to the third aspect, in a first implementation manner of the third aspect, the receiving and storing, by an HSS, an identity that is of an access transfer control function ATCF device accessed by user equipment and that is sent by a first SCC AS includes: receiving, by the HSS, the identity that is of the access transfer control function ATCF device accessed by the user equipment and that is sent by the first SCC AS and a subscriber identity of the user equipment; and storing a mapping relationship between the subscriber identity and the identity of the ATCF device, where the sending, by the CSCF device, a request message that is used to instruct to query the identity of the ATCF device to the HSS includes: sending, by the CSCF device, the request message that is used to instruct to query the identity of the ATCF to the HSS, where the request message includes the subscriber identity of the user equipment; and the sending, by the HSS, the identity of the ATCF device to the CSCF device according to the request message includes: determining, by the HSS, the ATCF device and the identity of the ATCF device according to the subscriber identity and information about a mapping relationship between the subscriber identity and the ATCF device, and sending the identity of the ATCF device to the CSCF device.

With reference to the third aspect and the foregoing implementation manner, in a second implementation manner of the third aspect, the receiving and storing, by an HSS, an identity that is of an access transfer control function ATCF device accessed by user equipment and that is sent by a first SCC AS includes: receiving, by the HSS, the identity that is of the access transfer control function ATCF device accessed by the user equipment and that is sent by the first SCC AS and an identity of the first SCC AS; and storing a mapping relationship between the identity of the first SCC AS and the identity of the ATCF device, where the sending, by the CSCF device, a request message that is used to instruct to query the identity of the ATCF device to the HSS includes: sending, by the CSCF device, the request message that is used to instruct to query the identity of the ATCF to the HSS, where the request message includes the identity of the first SCC AS; and the sending, by the HSS, the identity of the ATCF device to the CSCF device according to the request message includes: determining, by the HSS, the ATCF device and the identity of the ATCF device according to the identity of the first SCC AS and information about a mapping relationship between the identity of the first SCC AS and the ATCF device, and sending the identity of the ATCF device to the CSCF device.

With reference to the third aspect and the foregoing implementation manners, in a third implementation manner of the third aspect, the sending, by the CSCF device, a request message that is used to instruct to query the identity of the ATCF device to the HSS includes: sending, by the CSCF device by using the second SCC AS, the request message that is used to instruct to query the identity of the ATCF device to the HSS.

With reference to the third aspect and the foregoing implementation manners, in a fourth implementation manner of the third aspect, the sending, by the HSS, the identity of the ATCF device to the CSCF device according to the request message includes: sending, by the HSS according to the request message, the identity of the ATCF device to the CSCF device by using the second SCC AS.

With reference to the third aspect and the foregoing implementation manners, in a fifth implementation manner of the third aspect, the CSCF device is an interrogating call session control function I-CSCF device.

With reference to the third aspect and the foregoing implementation manners, in a sixth implementation manner of the third aspect, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

According to a fourth aspect, a troubleshooting apparatus is provided. The apparatus includes: a receiving unit, configured to: after a first service centralization and continuity application server SCC AS becomes faulty, receive an identity that is of an access transfer control function ATCF device accessed by user equipment and that is sent by a home subscriber server HSS, where the apparatus is determined by a call session control function CSCF device after the CSCF device detects that the first SCC AS becomes faulty; and a sending unit, configured to send an identity of the apparatus to the ATCF device according to the identity of the ATCF device, where the receiving unit is further configured to receive a handover request that is sent by the ATCF device according to the identity of the apparatus.

With reference to the fourth aspect, in a first implementation manner of the fourth aspect, the sending unit is further configured to send a user data request UDR message to the HSS, where the UDR message includes a subscriber identity of the user equipment; and the receiving unit is specifically configured to receive the identity that is of the ATCF device accessed by the user equipment and that is sent by the HSS, where the identity of the ATCF device is sent by the HSS after the HSS determines the ATCF device according to the subscriber identity and information about a mapping relationship between the subscriber identity and the ATCF device.

With reference to the fourth aspect and the foregoing implementation manner, in a second implementation manner of the fourth aspect, the sending unit is further configured to send a UDR message to the HSS, where the UDR message includes an identity of the first SCC AS; and the receiving unit is specifically configured to receive the identity that is of the ATCF device accessed by the user equipment and that is sent by the HSS, where the identity of the ATCF device is sent by the HSS after the HSS determines the ATCF device according to the identity of the first SCC AS and information about a mapping relationship between the identity of the first SCC AS and the ATCF device.

With reference to the fourth aspect and the foregoing implementation manners, in a third implementation manner of the fourth aspect, the receiving unit is further configured to receive a notification message that is used to instruct to replace the first SCC AS with the apparatus and that is sent by the CSCF device; and the sending unit is specifically configured to send the UDR message to the HSS according to the notification message.

With reference to the fourth aspect and the foregoing implementation manners, in a fourth implementation manner of the fourth aspect, the receiving unit is specifically configured to receive a user data answer UDA message sent by the HSS, where the UDA message includes the identity of the ATCF device and user data of the user equipment.

With reference to the fourth aspect and the foregoing implementation manners, in a fifth implementation manner of the fourth aspect, the identity of the ATCF device includes a public service identity PSI of the ATCF device and a path uniform resource identifier Path URI of the ATCF device, and the identity of the apparatus includes an access transfer update-session transfer identifier ATU-STI of the apparatus.

According to a fifth aspect, a troubleshooting apparatus is provided. The apparatus includes: a receiving unit, configured to receive an identity that is of an access transfer control function ATCF device accessed by user equipment and that is sent by a first service centralization and continuity application server SCC AS; a storage unit, configured to store the identity of the ATCF device, where the receiving unit is further configured to receive a request message that is used to instruct to query the identity of the ATCF and that is sent by a call session control function CSCF device; a querying unit, configured to query the identity of the ATCF device according to the request message; and a sending unit, configured to send the identity of the ATCF device to a second SCC AS, so that the second SCC AS sends an identity of the second SCC AS to the ATCF device according to the identity of the ATCF device, where the second SCC AS is determined by the CSCF device after the CSCF device detects that the first SCC AS becomes faulty.

With reference to the fifth aspect, in a first implementation manner of the fifth aspect, the receiving unit is specifically configured to receive the identity that is of the access transfer control function ATCF device accessed by the user equipment and that is sent by the first SCC AS and a subscriber identity of the user equipment; the storage unit is specifically configured to store a mapping relationship between the subscriber identity and the identity of the ATCF device; the receiving unit is specifically configured to receive the request message that is used to instruct to query the identity of the ATCF and that is sent by the CSCF device, where the request message includes the subscriber identity of the user equipment; and the querying unit is specifically configured to determine the ATCF device and the identity of the ATCF device according to the subscriber identity and information about a mapping relationship between the subscriber identity and the ATCF device.

With reference to the fifth aspect and the foregoing implementation manner, in a second implementation manner of the fifth aspect, the receiving unit is specifically configured to receive the identity that is of the access transfer control function ATCF device accessed by the user equipment and that is sent by the first SCC AS and an identity of the first SCC AS; the storage unit is specifically configured to store a mapping relationship between the identity of the first SCC AS and the identity of the ATCF device; the receiving unit is specifically configured to receive the request message that is used to instruct to query the identity of the ATCF and that is sent by the CSCF device, where the request message includes the identity of the first SCC AS; and the querying unit is specifically configured to determine the ATCF device and the identity of the ATCF device according to the identity of the first SCC AS and information about a mapping relationship between the identity of the first SCC AS and the ATCF device.

With reference to the fifth aspect and the foregoing implementation manners, in a third implementation manner of the fifth aspect, the receiving unit is specifically configured to receive the request message that is used to instruct to query the identity of the ATCF and that is sent by the CSCF device by using the second SCC AS.

With reference to the fifth aspect and the foregoing implementation manners, in a fourth implementation manner of the fifth aspect, the receiving unit is specifically configured to receive the request message that is used to instruct to query the identity of the ATCF and that is sent by the CSCF device, where the request message includes the identity of the second SCC AS; and the sending unit is specifically configured to send the identity of the ATCF device to the second SCC AS according to the identity of the second SCC AS.

With reference to the fifth aspect and the foregoing implementation manners, in a fifth implementation manner of the fifth aspect, the sending unit is specifically configured to send a user data answer UDA message to the second SCC AS, where the UDA message includes the identity of the ATCF device and user data of the user equipment.

With reference to the fifth aspect and the foregoing implementation manners, in a sixth implementation manner of the fifth aspect, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

According to a sixth aspect, a troubleshooting system is provided. The system includes: a first service centralization and continuity application server SCC AS, configured to send an identity that is of an access transfer control function ATCF device accessed by user equipment to a home subscriber server HSS; a call session control function CSCF device, configured to: after detecting that the first SCC AS becomes faulty, determine a second SCC AS, and send a request message that is used to instruct to query the identity of the ATCF device to the HSS, configured to receive the identity of the ATCF device sent by the HSS according to the request message, configured to send an identity of the second SCC AS to the ATCF device according to the identity of the ATCF device, configured to receive a handover request that is sent by the ATCF device according to the identity of the second SCC AS, where the handover request carries the identity of the second SCC AS, and configured to forward the handover request to the second SCC AS according to the identity of the second SCC AS; the HSS, configured to receive and store the identity of the ATCF device, and send, according to the request message, the identity of the ATCF device to the CSCF device; and the second SCC AS, configured to receive the handover request forwarded by the CSCF device.

With reference to the sixth aspect and the foregoing implementation manner, in a first implementation manner of the sixth aspect, the HSS is specifically configured to: receive the identity that is of the access transfer control function ATCF device accessed by the user equipment and that is sent by the first SCC AS and a subscriber identity of the user equipment; store a mapping relationship between the subscriber identity and the identity of the ATCF device; receive the request message that is used to instruct to query the identity of the ATCF and that is sent by the CSCF device, where the request message includes the subscriber identity of the user equipment; and determine the ATCF device and the identity of the ATCF device according to the subscriber identity and information about a mapping relationship between the subscriber identity and the ATCF device, and send the identity of the ATCF device to the CSCF device.

With reference to the sixth aspect and the foregoing implementation manners, in a second implementation manner of the sixth aspect, the HSS is specifically configured to: receive the identity that is of the access transfer control function ATCF device accessed by the user equipment and that is sent by the first SCC AS and an identity of the first SCC AS; store a mapping relationship between the identity of the first SCC AS and the identity of the ATCF device; receive the request message that is used to instruct to query the identity of the ATCF and that is sent by the CSCF device, where the request message includes the identity of the first SCC AS; and determine the ATCF device and the identity of the ATCF device according to the identity of the first SCC AS and information about a mapping relationship between the identity of the first SCC AS and the ATCF device, and send the identity of the ATCF device to the CSCF device.

With reference to the sixth aspect and the foregoing implementation manners, in a third implementation manner of the sixth aspect, the CSCF device is specifically configured to send, by using the second SCC AS, the request message that is used to instruct to query the identity of the ATCF device to the HSS.

With reference to the sixth aspect and the foregoing implementation manners, in a fourth implementation manner of the sixth aspect, the HSS is specifically configured to send, according to the request message, the identity of the ATCF device to the CSCF device by using the second SCC AS.

With reference to the sixth aspect and the foregoing implementation manners, in a fifth implementation manner of the sixth aspect, the CSCF device is an interrogating call session control function I-CSCF device.

With reference to the sixth aspect and the foregoing implementation manners, in a sixth implementation manner of the sixth aspect, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

According to the troubleshooting method, apparatus, and system in the embodiments of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

### BRIEF DESCRIPTION OF DRAWINGS

FIG. 1 is a schematic architecture diagram of a communications system that is applicable to a troubleshooting method according to the present invention;
FIG. 2 is a schematic flowchart of a troubleshooting method according to an embodiment of the present invention;
FIG. 3 is a schematic interaction diagram of a troubleshooting method according to the present invention;
FIG. 4 is a schematic flowchart of a troubleshooting method according to another embodiment of the present invention;
FIG. 5 is a schematic flowchart of a troubleshooting method according to still another embodiment of the present invention;
FIG. 6 is a schematic structural diagram of a troubleshooting apparatus according to an embodiment of the present invention;
FIG. 7 is a schematic structural diagram of a troubleshooting apparatus according to another embodiment of the present invention;
FIG. 8 is a schematic structural diagram of a troubleshooting system according to an embodiment of the present invention;
FIG. 9 is a schematic structural diagram of a troubleshooting device according to an embodiment of the present invention; and
FIG. 10 is a schematic structural diagram of a troubleshooting device according to another embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

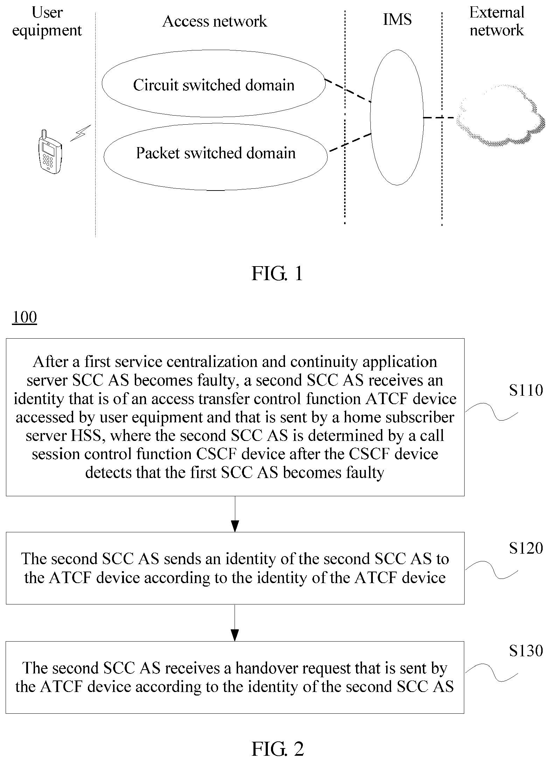

A technical solution in the present invention may be applied to various communications systems that can implement communication by using a circuit switched domain network and a packet switched domain network, for example, an IP multimedia subsystem (IMS, Internet Protocol Multimedia Subsystem). FIG. 1 shows a schematic structural diagram of a communications system that is applicable to a troubleshooting method according to the present invention. As shown in FIG. 1, the communications system may include three parts: an access network, an IP multimedia subsystem (IMS, IP Multimedia subsystem), and an external network.

Various networks that provide a service for a user may be enumerated as the external network, such as the Internet (Internet) or a public switched telephone network (PSTN, Public Switched Telephone Network).

The access network may include a circuit switched (CS, Circuit Switched) domain network or a packet switched (PS, Packet Switched) domain network.

Specifically, the access network may be a Global System for Mobile communication (GSM, Global System for Mobile communication) network, a Code Division Multiple Access (CDMA, Code Division Multiple Access) network, a Wideband Code Division Multiple Access (WCDMA, Wideband Code Division Multiple Access) network, a general packet radio service (GPRS, General Packet Radio Service) network, a Long Term Evolution (LTE, Long Term Evolution) network, a wireless local area network (WLAN, Wireless Local Area Network), or the like.

With development of technologies, in a technology such as VoLTE, voice transmission can be implemented in a PS domain. VoLTE is an IP data transmission technology, in which a 2G/3G network is not needed, and all services are carried on a 4G network. That is, in the 4G network, not only a high-rate data service but also a high-quality audio and video call are provided, and the audio and video call needs to be implemented by using the VoLTE technology.

The IMS (or may be referred to as a core network) is used to transmit data from the access network to the external network, or transmit data from the external network to the access network. More specifically, the IMS is a universal network architecture that provides a multimedia service on an IP-based network.

User equipment (UE, User Equipment) accesses the IMS by using the access network. The UE includes a mobile terminal (Mobile Terminal) or a fixed terminal. The mobile terminal may be a mobile phone (or referred to as a "cellular" phone) or a computer with a mobile terminal, for example, may be a portable, pocket-sized, handheld, computer built-in, or in-vehicle mobile apparatus, which exchanges language and/or data with a radio access network.

For ease of understanding and description, the following describes a troubleshooting method and apparatus in embodiments of the present invention by using a processing process that is applicable to the IMS as an example.

FIG. 2 shows a schematic flowchart of a troubleshooting method 100 according to an embodiment of the present invention, where the method is described from a perspective of a second service centralization and continuity application server. As shown in FIG. 2, the method 100 includes the following steps:
S110. After a first service centralization and continuity application server SCC AS becomes faulty, a second SCC AS receives an identity that is of an access transfer control function ATCF device accessed by user equipment and that is sent by a home subscriber server HSS, where the second SCC AS is determined by a call session control function CSCF device after the CSCF device detects that the first SCC AS becomes faulty.
S120. The second SCC AS sends an identity of the second SCC AS to the ATCF device according to the identity of the ATCF device.
S130. The second SCC AS receives a handover request that is sent by the ATCF device according to the identity of the second SCC AS.

First, network elements in an IMS that are involved in the foregoing method 100 are described.

### A. Home subscriber server (HSS, Home Subscriber Server)

The HSS is a centralized and comprehensive database, in a home network, which stores subscriber subscription information, service subscription information, and the like, and is located at a top layer of an IMS architecture. The HSS includes subscriber-related subscription data required when a media session is processed, such as location information, security information (including authentication and authorization information), subscriber service attribute information (including information about a subscribed service of a user), information about a serving CSCF (S-CSCF) assigned to a user, and information about a subscriber identity (including public and private identities), number, and address.

### B. Service centralization and continuity application server (SCC AS, Service Centralization and Continuity Application Server)

The SCC AS may be used as a Session Initiation Protocol application server (SIP AS, Session Initiation Protocol application server) of user equipment, enable the user equipment to access the IMS (by using an access network), and implement IMS session establishment and control. The SCC AS is an IMS application server in the home network, the first AS in a calling path, and the last AS in a called path. When being accessed in a terminating call, the SCC AS may select, according to factors such as a status of the access network, a capability of the user equipment (for example, whether VoLTE is supported), a registration status of the IMS, a CS status, and a carrier policy, a CS domain or a PS domain to be used by the user equipment to perform communication.

In addition, when a domain handover needs to be performed for the user equipment, for example, if the user equipment supports VoLTE and CS domain voice transmission, for example, when the user equipment moves from a 2G/3G network to a 4G network, or when the user equipment moves from a 4G network to a 2G/3G network, the SCC AS executes handover processing, for example, enhanced single radio voice call continuity (eSRVCC, enhanced single radio voice call continuity) handover processing, and provides a handover service for the user equipment, so as to ensure continuity of a voice service.

### C. Call session control function (CSCF, Call Session Control Function) device

The CSCF device is a functional entity in the IMS, and is a core of the entire IMS. The CSCF device is mainly responsible for processing signaling control in a multimedia call session process. The CSCF device manages user authentication of the IMS and quality of service (QoS, Quality of Service) on an IMS bearer plane, and cooperates with another network element to perform SIP session control, service negotiation, resource assignment, and the like.

According to functions, the CSCF is classified into a proxy CSCF (P-CSCF, Proxy CSCF), an interrogating CSCF (I-CSCF, Interrogating CSCF), a serving CSCF (S-CSCF, Serving CSCF), and the like.

The P-CSCF is a unified entry point of a visited IMS network (an example of the access network). All session messages that are originated from the user equipment and terminated at the user equipment need to pass through the P-CSCF. As a SIP Proxy, the P-CSCF is responsible for functions such as management of user authentication related to the access network and Internet Protocol security (IPSec, Internet Protocol Security), network anti-attack and security protection, SIP signaling compression and decompression for saving a radio network resource, roaming control for a user, and network address translation (NAT, Network Address Translation) and QoS on a bearer plane by using a policy decision function (PDF, Policy Decision Function). For example, the P-CSCF may determine an I-CSCF according to a domain name provided by the user equipment, and forward a SIP registration request from the user equipment to the I-CSCF. For another example, the P-CSCF may forward a SIP message from the user equipment to an S-CSCF determined when the user equipment initiates a registration process.

The I-CSCF is an entry point of a home IMS network (another example of the access network). In a registration process, the I-CSCF selects an S-CSCF for a user by querying the HSS. In a call process, a call to the IMS network is first routed to the I-CSCF; the I-CSCF obtains, from the HSS, an address of the S-CSCF with which the user is registered, and routes a message to the S-CSCF. For example, the I-CSCF may specify an S-CSCF to execute SIP registration for the user equipment. For another example, the I-CSCF may obtain an address of an S-CSCF from the HSS, and forward a SIP request or route a SIP request transmitted from another network to the S-CSCF.

The S-CSCF plays an important role in IMS network session control. The S-CSCF accepts a registration request that is from the visited network and that is forwarded by the P-CSCF, cooperates with the HSS to perform user authentication, and downloads data of a service subscribed by the user from the HSS. The S-CSCF performs route management on a calling side and a called side of the user, triggers the SIP AS according to initial filter criteria (IFC, Initial Filter Criteria) subscribed by the user, and implements diverse IMS service functions. For example, after receiving the registration request, the S-CSCF may validate the registration request by using the HSS. For another example, the S-CSCF may control a registered session terminal, and may be used as a proxy server (Proxy Server). For still another example, after receiving the request, the S-CSCF may perform internal processing or forward the request, or may be used as a user agent (UA, User Agent) to interrupt or initiate a SIP transaction. For still another example, the S-CSCF may further interact with a service platform to provide a multimedia service.

It should be noted that the foregoing P-CSCF, S-CSCF, and I-CSCF may be independently configured in different entities, or may be integrated into a same entity. For ease of understanding and description, the P-CSCF, the S-CSCF, and the I-CSCF are collectively referred to as the CSCF device hereinafter.

### D. Access transfer control function (ATCF, Access Transfer Control Function) device

The ATCF device is configured in the visited network, and is configured to control an access gateway (AGW, Access Gateway) so as to anchor a voice session initiated in the visited network by a user. Specifically, the ATCF may anchor a signaling part of the user voice session, and control the AGW to anchor a media part of the session.

When the handover processing, such as the foregoing eSRVCC handover processing, used to enable the user equipment to be handed over between a 2G/3G network and a 4G network (for example, an LTE network) is performed, a mobile switching center (MSC, Mobile Switching Center) server of the visited network no longer re-establishes a session access end with the home IMS network of the user or re-establishes media with a remote end, but re-establishes a session (including media) with an anchoring ATCF of the visited network, so as to avoid interruption of a voice service accessed by the user, and improve user experience.

It should be noted that both the ATCF device and the P-CSCF device belong to the visited network, and may be configured in a same entity, or may be configured in different entities. In addition, the ATCF device and the P-CSCF device can communicate with each other so as to exchange related information about the user equipment, for example, a subscriber identity.

The following describes in detail actions and functions of the foregoing network elements in the method 100 in the embodiment of the present invention with reference to a specific interaction procedure.

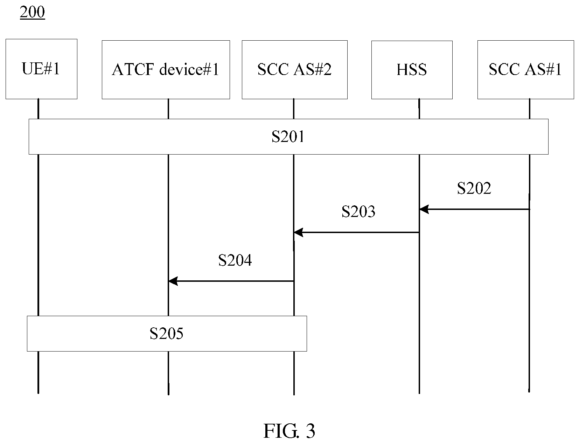

FIG. 3 is a schematic interaction diagram of a troubleshooting method according to the present invention.

As shown in FIG. 3, in S201, a registration procedure for UE#1 (that is, an example of user equipment) is executed.

As an example instead of a limitation, in the registration procedure, after receiving a registration request message sent by the UE#1, a P-CSCF device (or an ATCF device) sends the registration request message and an identity (that is, an example of an ATCF device identity) used to indicate an ATCF device (for ease of differentiation, described as an ATCF device#1 hereinafter) accessed by the UE#1 to an S-CSCF device.

The S-CSCF device assigns an SCC AS to the UE#1 (that is, a first SCC AS, for ease of understanding and differentiation, described as an SCC AS#1 hereinafter), and transmits the registration request message and the identity of the ATCF device#1 to the SCC AS#1.

Therefore, the SCC AS#1 can obtain the identity of the ATCF device.

In addition, any of the following information may be enumerated as the identity of the ATCF device.

Optionally, the identity of the ATCF device includes a public service identity PSI of the ATCF device and a path uniform resource identifier Path URI of the ATCF device.

Specifically, an ATCF device can be uniquely identified by using a public service identity (PSI, Public Service Identity) and a path uniform resource identifier (Path URI, Path Uniform Resource Identifier) of the ATCF device. Therefore, the foregoing identity of the ATCF device may include the PSI and the Path URI.

It should be understood that the above-enumerated identity of the ATCF device is only exemplary description, and the present invention is not limited thereto. For example, when receiving the registration request sent by the UE#1, the P-CSCF device assigns a session transfer number for single radio voice call continuity (STN-SR, Session Transfer Number for SRVCC) to the UE#1. When the STN-SR may be used to identify the ATCF device (that is, the ATCF device#1) accessed by the UE#1, the STN-SR may be further used as the foregoing identity of the ATCF device.

In addition, the foregoing identity of the ATCF device#1 may be carried in the foregoing registration request message forwarded by the P-CSCF device to the S-CSCF device, and the S-CSCF device may forward the registration request message that carries the identity of the ATCF device#1 to the SCC AS#1, so that the SCC AS#1 may obtain the identity of the ATCF device#1 from the registration request message.

In S202, the SCC AS#1 may send the identity of the ATCF device#1 to an HSS.

For example, the SCC AS#1 may use the identity of the ATCF device#1 as transparent data, and pushes the identity of the ATCF device#1 to the HSS by using a transparent data profile update request (PUR, Profile Update Request) message. Therefore, the identity of the ATCF device can be transmitted by using existing signaling.

It should be understood that the above-enumerated process in which the HSS obtains the identity of the ATCF device is only exemplary description, and the present invention is not limited thereto. For example, the SCC AS#1 may also transmit the identity of the ATCF device to the HSS by using other signaling, or the SCC AS#1 may transmit the identity of the ATCF device to the HSS by using the CSCF device.

The identity of the ATCF device#1 that is corresponding to the SCC AS#1 may be stored in the HSS.

In this embodiment of the present invention, the S-CSCF device may detect a running status of the SCC AS#1. When detecting that the SCC AS#1 becomes faulty, the S-CSCF device may select a new SCC AS (that is, a second SCC AS, for ease of understanding and differentiation, described as an SCC AS#2 hereinafter) to replace the SCC AS#1 with the SCC AS#2, so as to execute handover processing for the UE#1, for example, the foregoing eSRVCC handover processing.

In S203, the HSS may use any one of the following manners to transmit the identity of the ATCF device#1 to the SCC AS#2.

### Manner 1

Optionally, before the second SCC AS receives the identity that is of the ATCF device accessed by the user equipment and that is sent by the HSS, the method further includes:
sending, by the second SCC AS, a user data request UDR message to the HSS, where the UDR message includes a subscriber identity of the user equipment,, where
that the second SCC AS receives the identity that is of the ATCF device accessed by the user equipment and that is sent by the HSS includes:
   receiving, by the second SCC AS, the identity that is of the ATCF device accessed by the user equipment and that is sent by the HSS, where the identity of the ATCF device is sent by the HSS after the HSS determines the ATCF device according to the subscriber identity and information about a mapping relationship between the subscriber identity and the ATCF device.

Specifically, in this case, the HSS may record a mapping relationship between the identity of the ATCF device (that is, the ATCF device#1) that is corresponding to the SCC AS#1 and the subscriber identity of the UE#1.

After determining the SCC AS#2, the CSCF device (specifically, an I-CSCF device) may transmit the identity of the UE#1 to the SCC AS#2 by using system signaling (for example, the user data request UDR message). As an example instead of a limitation, the identity of the UE#1 may be enumerated, such as a mobile station international integrated services digital network number MSISDN of the UE#1, an international mobile subscriber identity IMSI of the UE#1, an international mobile station equipment identity IMEI of the UE#1, or an IP address of the UE#1.

According to the identity of the UE#1, the SCC AS#2 may determine that user data of the UE#1 is not locally stored, and therefore may initiate a procedure of requesting to obtain the user data to the HSS. In addition, the SCC AS#2 may transmit the identity of the UE#1 to the HSS, so that the HSS searches for, according to the identity of the UE#1, the ATCF device accessed by the UE#1, that is, the ATCF device#1.

In addition, the foregoing subscriber identity is carried by using the user data request (UDR, User Data Request) message, so that the subscriber identity can be transmitted by using existing signaling.

It should be understood that the above-enumerated manner in which the subscriber identity is carried by using the UDR message is only exemplary description, and the present invention is not limited thereto. Another message by which signaling transmission between the HSS and the SCC AS can be implemented shall fall within the protection scope of the present invention.

After receiving the message that carries the identity of the UE#1, the HSS may search for the pre-recorded mapping relationship between the subscriber identity and the identity of the ATCF device according to the identity of the UE#1, so that the ATCF device, that is, the ATCF device#1, accessed by the UE#1 can be found.

In addition, after determining the ATCF device#1 as described above, the HSS may transmit the identity of the ATCF device#1 and the user data of the UE#1 to the SCC AS#2.

In addition, the identity of the ATCF device#1 is carried by using a user data answer (UDA, User Data Answer) message, so that the identity of the ATCF device can be transmitted by using existing signaling.

It should be understood that the above-enumerated manner in which the identity of the ATCF device#1 is carried by using the UDA message is only exemplary description, and the present invention is not limited thereto. Another message by which signaling transmission between the HSS and the SCC AS can be implemented shall fall within the protection scope of the present invention.

According to the troubleshooting method in this embodiment of the present invention, an HSS can transmit user data and an identity of an ATCF device to an SCC AS#2 at the same time, so that an interaction procedure can be reduced, and system resource overheads can be reduced.

It should be noted that in this embodiment of the present invention, the foregoing user data may be information used to perform, for example, eSRVCC handover processing in the prior art. To avoid repetition, detailed description is omitted herein.

### Manner 2

Optionally, before the second SCC AS receives the identity that is of the ATCF device accessed by the user equipment and that is sent by the HSS, the method further includes:
sending, by the second SCC AS, a UDR message to the HSS, where the UDR message includes an identity of the first SCC AS, where
that the second SCC AS receives the identity that is of the ATCF device accessed by the user equipment and that is sent by the HSS includes:
   receiving, by the second SCC AS, the identity that is of the ATCF device accessed by the user equipment and that is sent by the HSS, where the identity of the ATCF device is sent by the HSS after the HSS determines the ATCF device according to the identity of the first SCC AS and information about a mapping relationship between the identity of the first SCC AS and the ATCF device.

Specifically, in this case, the HSS may record a mapping relationship between the identity of the ATCF device (that is, the ATCF device#1) that is corresponding to the SCC AS#1 and the identity of the SCC AS#1.

After determining the SCC AS#2, the CSCF device (specifically, an I-CSCF device) may transmit the identity of the SCC AS#1 to the SCC AS#2 by using system signaling (for example, the user data request UDR message). As an example instead of a limitation, the identity of the SCC AS#1 may be enumerated, such as an access transfer update-session transfer identifier ATU-STI of the SCC AS#1.

The SCC AS#2 may initiate a procedure of requesting to obtain user data of user equipment (including the foregoing UE#1) that is corresponding to the SCC AS#1 to the HSS. In addition, the SCC AS#2 may transmit the identity of the SCC AS#1 to the HSS, so that the HSS searches for, according to the identity of the SCC AS#1, the ATCF device corresponding to the SCC AS#1, that is, the ATCF device#1.

In addition, the foregoing identity of the SCC AS#1 is carried by using the user data request (UDR, User Data Request) message, so that the identity of the SCC AS#1can be transmitted by using existing signaling.

It should be understood that the above-enumerated manner in which the identity of the SCC AS is carried by using the UDR message is only exemplary description, and the present invention is not limited thereto. Another message by which signaling transmission between the HSS and the SCC AS can be implemented shall fall within the protection scope of the present invention.

After receiving the message that carries the identity of the SCC AS#1, the HSS may search for the pre-recorded mapping relationship between the identity of the SCC AS and the identity of the ATCF device according to the identity of the SCC AS#1, so that the ATCF device (including that accessed by the UE#1) corresponding to the SCC AS#1, that is, the ATCF device#1, can be found.

In addition, after determining the ATCF device#1 as described above, the HSS may transmit the identity of the ATCF device#1 to the SCC AS#2.

In addition, the identity of the ATCF device#1 is carried by using a user data answer (UDA, User Data Answer) message, so that the identity of the ATCF device can be transmitted by using existing signaling.

It should be understood that the above-enumerated manner in which the identity of the ATCF device#1 is carried by using the UDA message is only exemplary description, and the present invention is not limited thereto. Another message by which signaling transmission between the HSS and the SCC AS can be implemented shall fall within the protection scope of the present invention.

According to the troubleshooting method in this embodiment of the present invention, an HSS can transmit user data and an identity of an ATCF device to an SCC AS#2 at the same time, so that an interaction procedure can be reduced, and system resource overheads can be reduced.

### Manner 3

After determining the SCC AS#2, the CSCF device (specifically, an I-CSCF device) may notify the HSS by using system signaling: the SCC AS#2 replaces the SCC AS#1.

Subsequently, after receiving the notification, the HSS may search for user equipment (including the UE#1) served by the SCC AS#1, obtain user data of all user equipment and the ATCF device accessed, that is, the ATCF device#1, and proactively send, according to an identity of the SCC AS#2, correspondences between all the user equipment and all the ATCF devices and the user data of all the user equipment to the CSCF device by using system signaling. The CSCF device may transmit the identity of the ATCF device#1 to the SCC AS#2.

It should be noted that in manner 3, a method in which the HSS searches for the ATCF device corresponding to the SCC AS#1 may be similar to the foregoing method in manner 1 or manner 2, that is, the ATCF device may be searched for by using the identity of the SCC AS#1, or may be searched for by using the subscriber identity of the UE#1. To avoid repetition, detailed description is omitted herein.

Therefore, the SCC AS#2 can obtain the identity of the ATCF device#1.

In S204, according to the identity of the ATCF device#1, the SCC AS#2 may send the identity of the SCC AS#2 to the ATCF device#1, for example, by using the CSCF device (specifically, the I-CSCF device). A method and a process in which information is routed from the SCC AS to the ATCF device may be similar to those in the prior art. To avoid repetition, detailed description is omitted herein.

Optionally, the identity of the second SCC AS includes an access transfer update-session transfer identifier ATU-STI of the second SCC AS.

Specifically, an SCC AS can be uniquely identified by using an access transfer update-session transfer identifier (ATU-STI, Access transfer update-session transfer identifier). Therefore, the identity of the second SCC AS may include the ATU-STI of the second SCC AS.

It should be understood that the above-enumerated example of the identity of the second SCC AS is only exemplary description, and the present invention is not limited thereto. Other information that can be used to uniquely indicate an SCC AS shall fall within the protection scope of the present invention.

In S205, when determining that network handover processing (for example, a handover from a 2G/3G network to an LTE network, or a handover from an LTE network to a 2G/3G network) needs to be performed for the UE#1, the ATCF device#1 may initiate, for example, by using the CSCF device (specifically, the I-CSCF device), a handover processing procedure such as an eSRVCC handover processing procedure to the SCC AS#2 according to the identity of the SCC AS#2.

According to the troubleshooting method in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

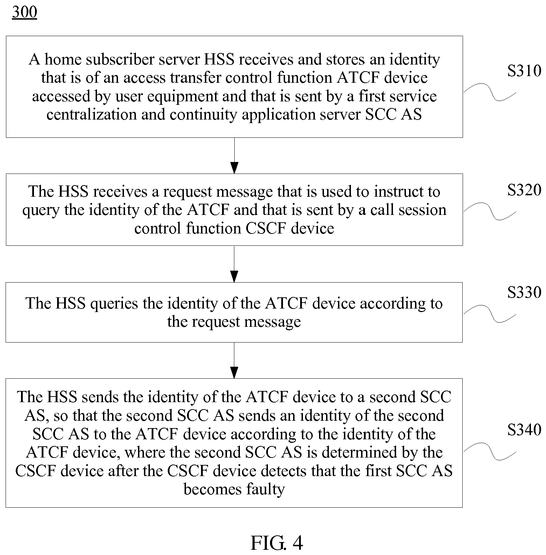

FIG. 4 shows a schematic flowchart of a troubleshooting method 300 according to an embodiment of the present invention, where the method is described from a perspective of a home subscriber server. As shown in FIG. 4, the method 300 includes the following steps:
S310. A home subscriber server HSS receives and stores an identity that is of an access transfer control function ATCF device accessed by user equipment and that is sent by a first service centralization and continuity application server SCC AS.
S320. The HSS receives a request message that is used to instruct to query the identity of the ATCF and that is sent by a call session control function CSCF device.
S330. The HSS queries the identity of the ATCF device according to the request message.
S340. The HSS sends the identity of the ATCF device to a second SCC AS, so that the second SCC AS sends an identity of the second SCC AS to the ATCF device according to the identity of the ATCF device, where the second SCC AS is determined by the CSCF device after the CSCF device detects that the first SCC AS becomes faulty.

Optionally, that the HSS receives and stores the identity that is of the access transfer control function ATCF device accessed by the user equipment and that is sent by the first SCC AS includes:
receiving, by the HSS, the identity that is of the access transfer control function ATCF device accessed by the user equipment and that is sent by the first SCC AS and a subscriber identity of the user equipment; and
storing a mapping relationship between the subscriber identity and the identity of the ATCF device, where
that the HSS receives the request message that is used to instruct to query the identity of the ATCF and that is sent by the CSCF device includes:
   receiving, by the HSS, the request message that is used to instruct to query the identity of the ATCF and that is sent by the CSCF device, where the request message includes the subscriber identity of the user equipment; and
   that the HSS queries the identity of the ATCF device according to the request message includes:
      determining, by the HSS, the ATCF device and the identity of the ATCF device according to the subscriber identity and information about a mapping relationship between the subscriber identity and the ATCF device.

Optionally, that the HSS receives and stores the identity that is of the access transfer control function ATCF device accessed by the user equipment and that is sent by the first SCC AS includes:
receiving, by the HSS, the identity that is of the access transfer control function ATCF device accessed by the user equipment and that is sent by the first SCC AS and an identity of the first SCC AS; and
storing a mapping relationship between the identity of the first SCC AS and the identity of the ATCF device, where
that the HSS receives the request message that is used to instruct to query the identity of the ATCF and that is sent by the CSCF device includes:
   receiving, by the HSS, the request message that is used to instruct to query the identity of the ATCF and that is sent by the CSCF device, where the request message includes the identity of the first SCC AS; and
   that the HSS queries the identity of the ATCF device according to the request message includes:
      determining, by the HSS, the ATCF device and the identity of the ATCF device according to the identity of the first SCC AS and information about a mapping relationship between the identity of the first SCC AS and the ATCF device.

Optionally, that the HSS receives the request message that is used to instruct to query the identity of the ATCF and that is sent by the CSCF device includes:
receiving, by the HSS, the request message that is used to instruct to query the identity of the ATCF and that is sent by the CSCF device by using the second SCC AS.

Optionally, that the HSS receives the request message that is used to instruct to query the identity of the ATCF and that is sent by the CSCF device includes:
receiving, by the HSS, the request message that is used to instruct to query the identity of the ATCF and that is sent by the CSCF device, where the request message includes the identity of the second SCC AS, where
that the HSS sends the identity of the ATCF device to the second SCC AS includes:
   sending, by the HSS, the identity of the ATCF device to the second SCC AS according to the identity of the second SCC AS.

Optionally, that the HSS sends the identity of the ATCF device to the second SCC AS includes:
sending, by the HSS, a user data answer UDA message to the second SCC AS, where the UDA message includes the identity of the ATCF device and user data of the user equipment.

Optionally, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

In the method 300, an action and a function of the HSS are similar to an action and a function of an HSS in the foregoing method 100. To avoid repetition, detailed description is omitted herein.

According to the troubleshooting method in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

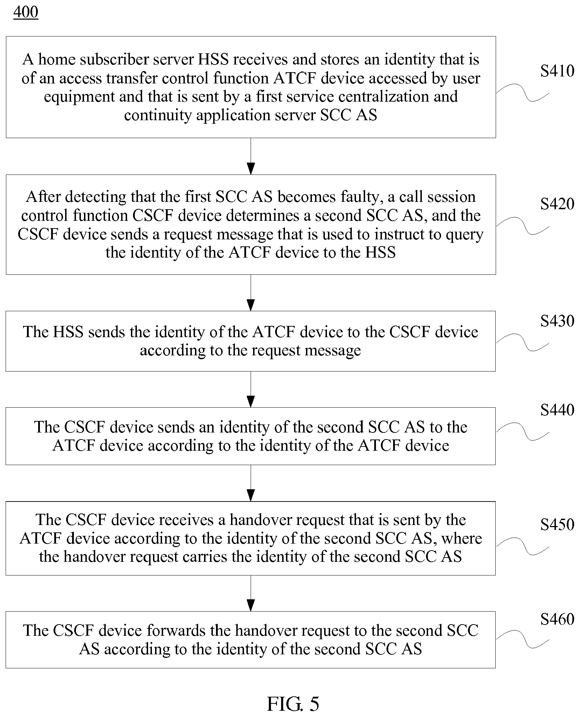

FIG. 5 shows a schematic flowchart of a troubleshooting method 400 according to an embodiment of the present invention, where the method is described from a perspective of a troubleshooting system that includes a home subscriber server and a call session control function device. As shown in FIG. 5, the method 400 includes the following steps:
S410. A home subscriber server HSS receives and stores an identity that is of an access transfer control function ATCF device accessed by user equipment and that is sent by a first service centralization and continuity application server SCC AS.
S420. After detecting that the first SCC AS becomes faulty, a call session control function CSCF device determines a second SCC AS, and the CSCF device sends a request message that is used to instruct to query the identity of the ATCF device to the HSS.
S430. The HSS sends the identity of the ATCF device to the CSCF device according to the request message.
S440. The CSCF device sends an identity of the second SCC AS to the ATCF device according to the identity of the ATCF device.
S450. The CSCF device receives a handover request that is sent by the ATCF device according to the identity of the second SCC AS, where the handover request carries the identity of the second SCC AS.
S460. The CSCF device forwards the handover request to the second SCC AS according to the identity of the second SCC AS.

Optionally, that the HSS receives and stores the identity that is of the access transfer control function ATCF device accessed by the user equipment and that is sent by the first SCC AS includes:
receiving, by the HSS, the identity that is of the access transfer control function ATCF device accessed by the user equipment and that is sent by the first SCC AS and a subscriber identity of the user equipment; and
storing a mapping relationship between the subscriber identity and the identity of the ATCF device, where
that the CSCF device sends the request message that is used to instruct to query the identity of the ATCF device to the HSS includes:
   sending, by the CSCF device, the request message that is used to instruct to query the identity of the ATCF to the HSS, where the request message includes the subscriber identity of the user equipment; and
   that the HSS sends the identity of the ATCF device to the CSCF device according to the request message includes:
      determining, by the HSS, the ATCF device and the identity of the ATCF device according to the subscriber identity and information about a mapping relationship between the subscriber identity and the ATCF device, and sending the identity of the ATCF device to the CSCF device.

Optionally, that the HSS receives and stores the identity that is of the access transfer control function ATCF device accessed by the user equipment and that is sent by the first SCC AS includes:
receiving, by the HSS, the identity that is of the access transfer control function ATCF device accessed by the user equipment and that is sent by the first SCC AS and an identity of the first SCC AS; and
storing a mapping relationship between the identity of the first SCC AS and the identity of the ATCF device, where
that the CSCF device sends the request message that is used to instruct to query the identity of the ATCF device to the HSS includes:
sending, by the CSCF device, the request message that is used to instruct to query the identity of the ATCF to the HSS, where the request message includes the identity of the first SCC AS; and
that the HSS sends the identity of the ATCF device to the CSCF device according to the request message includes:
   determining, by the HSS, the ATCF device and the identity of the ATCF device according to the identity of the first SCC AS and information about a mapping relationship between the identity of the first SCC AS and the ATCF device, and sending the identity of the ATCF device to the CSCF device.

Optionally, that the CSCF device sends the request message that is used to instruct to query the identity of the ATCF device to the HSS includes:
sending, by the CSCF device by using the second SCC AS, the request message that is used to instruct to query the identity of the ATCF device to the HSS.

Optionally, that the HSS sends the identity of the ATCF device to the CSCF device according to the request message includes:
sending, by the HSS according to the request message, the identity of the ATCF device to the CSCF device by using the second SCC AS.

Optionally, the CSCF device is an interrogating call session control function I-CSCF device.

Optionally, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

In the method 400, an action and a function of the HSS are similar to an action and a function of an HSS in the foregoing method 100, and an action and a function of the CSCF device are similar to an action and a function of a CSCF device in the foregoing method 100. To avoid repetition, detailed description is omitted herein.

According to the troubleshooting method in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

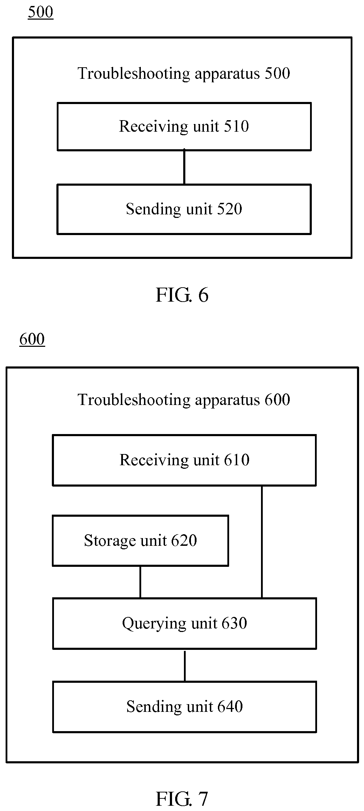

The troubleshooting methods according to the embodiments of the present invention are hereinbefore described in detail with reference to FIG. 1 to FIG. 5. Troubleshooting apparatuses according to embodiments of the present invention are hereinafter described in detail with reference to FIG. 6 to FIG. 7.

FIG. 6 shows a schematic block diagram of a troubleshooting apparatus 500 according to an embodiment of the present invention. As shown in FIG. 6, the apparatus 500 includes:
a receiving unit 510, configured to: after a first service centralization and continuity application server SCC AS becomes faulty, receive an identity that is of an access transfer control function ATCF device accessed by user equipment and that is sent by a home subscriber server HSS, where the apparatus is determined by a call session control function CSCF device after the CSCF device detects that the first SCC AS becomes faulty; and
a sending unit 520, configured to send an identity of the apparatus to the ATCF device according to the identity of the ATCF device, where
the receiving unit 510 is further configured to receive a handover request that is sent by the ATCF device according to the identity of the apparatus.

Optionally, the sending unit 520 is further configured to send a user data request UDR message to the HSS, where the UDR message includes a subscriber identity of the user equipment; and
the receiving unit 510 is specifically configured to receive the identity that is of the ATCF device accessed by the user equipment and that is sent by the HSS, where the identity of the ATCF device is sent by the HSS after the HSS determines the ATCF device according to the subscriber identity and information about a mapping relationship between the subscriber identity and the ATCF device.

Optionally, the sending unit 520 is further configured to send a UDR message to the HSS, where the UDR message includes an identity of the first SCC AS; and
the receiving unit 510 is specifically configured to receive the identity that is of the ATCF device accessed by the user equipment and that is sent by the HSS, where the identity of the ATCF device is sent by the HSS after the HSS determines the ATCF device according to the identity of the first SCC AS and information about a mapping relationship between the identity of the first SCC AS and the ATCF device.

Optionally, the receiving unit 510 is further configured to receive a notification message that is used to instruct to replace the first SCC AS with the apparatus and that is sent by the CSCF device; and
the sending unit 520 is specifically configured to send the UDR message to the HSS according to the notification message.

Optionally, the receiving unit 510 is specifically configured to receive a user data answer UDA message sent by the HSS, where the UDA message includes the identity of the ATCF device and user data of the user equipment.

Optionally, the identity of the ATCF device includes a public service identity PSI of the ATCF device and a path uniform resource identifier Path URI of the ATCF device, and the identity of the apparatus includes an access transfer update-session transfer identifier ATU-STI of the apparatus.

The troubleshooting apparatus 500 according to this embodiment of the present invention may correspond to a second SCC AS (for example, an SCC AS#2) in a method according to an embodiment of the present invention. In addition, units and modules in the troubleshooting apparatus 500 and the foregoing other operations and/or functions are respectively intended to implement corresponding procedures of the method 100 in FIG. 2. For brevity, details are not described herein.

According to the troubleshooting apparatus in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

FIG. 7 shows a schematic block diagram of a troubleshooting apparatus 600 according to an embodiment of the present invention. As shown in FIG. 7, the apparatus 600 includes:
a receiving unit 610, configured to receive an identity that is of an access transfer control function ATCF device accessed by user equipment and that is sent by a first service centralization and continuity application server SCC AS;
a storage unit 620, configured to store the identity of the ATCF device, where
the receiving unit 610 is further configured to receive a request message that is used to instruct to query the identity of the ATCF and that is sent by a call session control function CSCF device;
a querying unit 630, configured to query the identity of the ATCF device according to the request message; and
a sending unit 640, configured to send the identity of the ATCF device to a second SCC AS, so that the second SCC AS sends an identity of the second SCC AS to the ATCF device according to the identity of the ATCF device, where the second SCC AS is determined by the CSCF device after the CSCF device detects that the first SCC AS becomes faulty.

Optionally, the receiving unit 610 is specifically configured to receive the identity that is of the access transfer control function ATCF device accessed by the user equipment and that is sent by the first SCC AS and a subscriber identity of the user equipment;
the storage unit 620 is specifically configured to store a mapping relationship between the subscriber identity and the identity of the ATCF device;
the receiving unit 610 is specifically configured to receive the request message that is used to instruct to query the identity of the ATCF and that is sent by the CSCF device, where the request message includes the subscriber identity of the user equipment; and
the querying unit 630 is specifically configured to determine the ATCF device and the identity of the ATCF device according to the subscriber identity and information about a mapping relationship between the subscriber identity and the ATCF device.

Optionally, the receiving unit 610 is specifically configured to receive the identity that is of the access transfer control function ATCF device accessed by the user equipment and that is sent by the first SCC AS and an identity of the first SCC AS;
the storage unit 620 is specifically configured to store a mapping relationship between the identity of the first SCC AS and the identity of the ATCF device;
the receiving unit 610 is specifically configured to receive the request message that is used to instruct to query the identity of the ATCF and that is sent by the CSCF device, where the request message includes the identity of the first SCC AS; and
the querying unit 630 is specifically configured to determine the ATCF device and the identity of the ATCF device according to the identity of the first SCC AS and information about a mapping relationship between the identity of the first SCC AS and the ATCF device.

Optionally, the receiving unit 610 is specifically configured to receive the request message that is used to instruct to query the identity of the ATCF and that is sent by the CSCF device by using the second SCC AS.

Optionally, the receiving unit 610 is specifically configured to receive the request message that is used to instruct to query the identity of the ATCF and that is sent by the CSCF device, where the request message includes the identity of the second SCC AS; and
the sending unit 640 is specifically configured to send the identity of the ATCF device to the second SCC AS according to the identity of the second SCC AS.

Optionally, the sending unit 640 is specifically configured to send a user data answer UDA message to the second SCC AS, where the UDA message includes the identity of the ATCF device and user data of the user equipment.

Optionally, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

The troubleshooting apparatus 600 according to this embodiment of the present invention may correspond to an HSS in a method according to an embodiment of the present invention. In addition, units and modules in the troubleshooting apparatus 600 and the foregoing other operations and/or functions are respectively intended to implement corresponding procedures of the method 300 in FIG. 4. For brevity, details are not described herein.

According to the troubleshooting apparatus in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

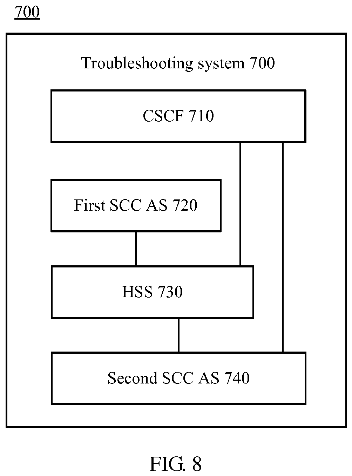

The troubleshooting methods according to the embodiments of the present invention are hereinbefore described in detail with reference to FIG. 1 to FIG. 5. A troubleshooting system according to an embodiment of the present invention is hereinafter described in detail with reference to FIG. 8.

FIG. 8 shows a schematic block diagram of a troubleshooting system 700 according to an embodiment of the present invention. As shown in FIG. 8, the system 700 includes: a first service centralization and continuity application server SCC AS, configured to send an identity that is of an access transfer control function ATCF device accessed by user equipment to a home subscriber server HSS;
a call session control function CSCF device, configured to: after detecting that the first SCC AS becomes faulty, determine a second SCC AS, and send a request message that is used to instruct to query the identity of the ATCF device to the HSS, configured to receive the identity of the ATCF device sent by the HSS according to the request message; configured to send an identity of the second SCC AS to the ATCF device according to the identity of the ATCF device; configured to receive a handover request that is sent by the ATCF device according to the identity of the second SCC AS, where the handover request carries the identity of the second SCC AS; and configured to forward the handover request to the second SCC AS according to the identity of the second SCC AS;
the HSS, configured to receive and store the identity of the ATCF device, and send, according to the request message, the identity of the ATCF device to the CSCF device ; and
the second SCC AS, configured to receive the handover request forwarded by the CSCF device.

Optionally, the HSS is specifically configured to: receive the identity that is of the access transfer control function ATCF device accessed by the user equipment and that is sent by the first SCC AS and a subscriber identity of the user equipment; store a mapping relationship between the subscriber identity and the identity of the ATCF device; receive the request message that is used to instruct to query the identity of the ATCF and that is sent by the CSCF device, where the request message includes the subscriber identity of the user equipment; and determine the ATCF device and the identity of the ATCF device according to the subscriber identity and information about a mapping relationship between the subscriber identity and the ATCF device, and send the identity of the ATCF device to the CSCF device.

Optionally, the HSS is specifically configured to: receive the identity that is of the access transfer control function ATCF device accessed by the user equipment and that is sent by the first SCC AS and an identity of the first SCC AS; store a mapping relationship between the identity of the first SCC AS and the identity of the ATCF device; receive the request message that is used to instruct to query the identity of the ATCF and that is sent by the CSCF device, where the request message includes the identity of the first SCC AS; and determine the ATCF device and the identity of the ATCF device according to the identity of the first SCC AS and information about a mapping relationship between the identity of the first SCC AS and the ATCF device, and send the identity of the ATCF device to the CSCF device.

Optionally, the CSCF device is specifically configured to send, by using the second SCC AS, the request message that is used to instruct to query the identity of the ATCF device to the HSS.

Optionally, the HSS is specifically configured to send, according to the request message, the identity of the ATCF device to the CSCF device by using the second SCC AS.

Optionally, the CSCF device is an interrogating call session control function I-CSCF device.

Optionally, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

The first SCC AS in the system 700 may correspond to an SCC AS#1 in a method according to an embodiment of the present invention, the second SCC AS may correspond to an SCC AS#2 in a method according to an embodiment of the present invention, the HSS may correspond to an HSS in a method according to an embodiment of the present invention, and the CSCF device may correspond to a CSCF device in a method according to an embodiment of the present invention. In addition, devices in the system 700 and the foregoing other operations and/or functions are respectively intended to implement corresponding procedures of the method 400 in FIG. 5. For brevity, details are not described herein.

According to the troubleshooting system in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

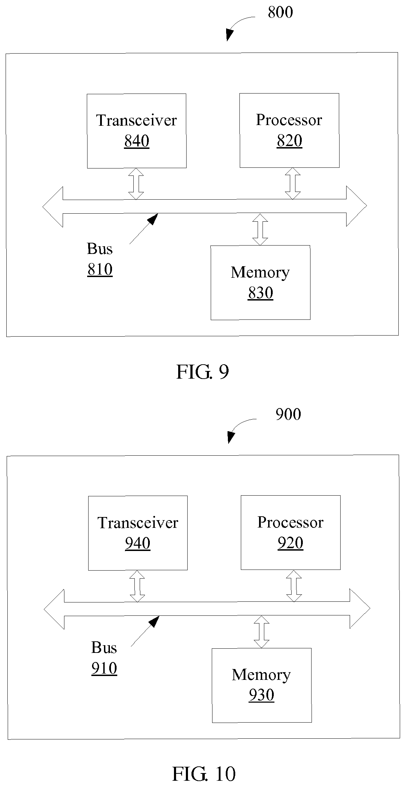

The troubleshooting methods according to the embodiments of the present invention are hereinbefore described in detail with reference to FIG. 1 to FIG. 5. Troubleshooting devices according to embodiments of the present invention are hereinafter described in detail with reference to FIG. 9 to FIG. 10.

FIG. 9 shows a schematic block diagram of a troubleshooting device 800 according to an embodiment of the present invention. As shown in FIG. 9, the device 800 includes:
a bus 810;
a processor 820 connected to the bus;
a memory 830 connected to the bus; and
a transceiver 840 connected to the bus.

The processor 820 calls, by using the bus, a program stored in the memory 830, so as to be configured to control a second SCC AS to receive, after a first service centralization and continuity application server SCC AS becomes faulty, an identity that is of an access transfer control function ATCF device accessed by user equipment and that is sent by a home subscriber server HSS, where the second SCC AS is determined by a call session control function CSCF device after the CSCF device detects that the first SCC AS becomes faulty;
configured to control the transceiver 840 to send an identity of the second SCC AS to the ATCF device according to the identity of the ATCF device; and
configured to control the transceiver 840 to receive a handover request that is sent by the ATCF device according to the identity of the second SCC AS.

Optionally, the processor 820 is further configured to control the transceiver 840 to send a user data request UDR message to the HSS, where the UDR message includes a subscriber identity of the user equipment; and
the processor 820 is specifically configured to control the transceiver 840 to receive the identity that is of the ATCF device accessed by the user equipment and that is sent by the HSS, where the identity of the ATCF device is sent by the HSS after the HSS determines the ATCF device according to the subscriber identity and information about a mapping relationship between the subscriber identity and the ATCF device.

Optionally, the processor 820 is further configured to control the transceiver 840 to send a UDR message to the HSS, where the UDR message includes an identity of the first SCC AS; and
the processor 820 is specifically configured to control the transceiver 840 to receive the identity that is of the ATCF device accessed by the user equipment and that is sent by the HSS, where the identity of the ATCF device is sent by the HSS after the HSS determines the ATCF device according to the identity of the first SCC AS and information about a mapping relationship between the identity of the first SCC AS and the ATCF device.

Optionally, the processor 820 is further configured to control the transceiver 840 to receive a notification message that is used to instruct to replace the first SCC AS with the second SCC AS and that is sent by the CSCF device; and
the processor 820 is specifically configured to control the transceiver 840 to send the UDR message to the HSS according to the notification message.

Optionally, the processor 820 is specifically configured to control the transceiver 840 to receive a user data answer UDA message sent by the HSS, where the UDA message includes the identity of the ATCF device and user data of the user equipment.

Optionally, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

The processor may also be referred to as a CPU. The memory may include a read-only memory and a random access memory, and provide an instruction and data to the processor. A part of the memory may further include a non-volatile random access memory (NVRAM). In a specific application, the device 800 may be embedded in or may be a network device such as an application server, and may further include a carrier that accommodates a transmit circuit and a receive circuit, so as to allow the device 800 to perform data transmission and reception with a remote location. The transmit circuit and the receive circuit may be coupled to an antenna. All components of the device 800 are coupled together by using the bus, where the bus may include a power bus, a control bus, and a status signal bus, in addition to a data bus. However, for clarity, various buses are denoted by the bus 810 in the figure. In different specific products, a decoder may be integrated with a processing unit as a whole.

The processor may implement or perform steps and logical block diagrams that are disclosed in the method embodiments of the present invention. The general purpose processor may be a microprocessor, or the processor may be any conventional processor, decoder, or the like. The steps of the methods disclosed with reference to the embodiments of the present invention may be directly completed by a hardware processor, or completed by a combination of hardware and a software module in a decoding processor. The software module may be located in a mature storage medium in the art, such as a random access memory, a flash memory, a read-only memory, a programmable read-only memory, an electrically erasable programmable memory, or a register.

It should be understood that in the embodiments of the present invention, the processor 820 may be a central processing unit (Central Processing Unit, "CPU" for short), or the processor 820 may be another general purpose processor, a digital signal processor (DSP), an application-specific integrated circuit (ASIC), a field programmable gate array (FPGA), or another programmable logic device, discrete gate or transistor logic device, discrete hardware assembly, or the like. The general purpose processor may be a microprocessor, or the processor may be any conventional processor, or the like.

The memory 830 may include a read-only memory and a random access memory, and provide an instruction and data to the processor 820. A part of the memory 830 may further include a non-volatile random access memory. For example, the memory 830 may further store information about a device type.

In addition to a data bus, the bus system 810 may further include a power bus, a control bus, a status signal bus, and the like. However, for clear description, various buses are denoted by the bus system 810 in the figure.

In an implementation process, the steps in the foregoing method may be implemented by using an integrated logic circuit of hardware in the processor 820 or a software-form instruction. The steps of the method disclosed with reference to the embodiments of the present invention may be directly completed by a hardware processor, or may be completed by a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory 830. The processor 820 reads information in the memory 830, and implements the steps of the foregoing methods in combination with hardware of the processor 820. To avoid repetition, details are not described herein.

The troubleshooting device 800 according to this embodiment of the present invention may correspond to a second SCC AS (for example, an SCC AS#2) in a method according to an embodiment of the present invention. In addition, units and modules in the troubleshooting device 800 and the foregoing other operations and/or functions are respectively intended to implement corresponding procedures of the method 100 in FIG. 2. For brevity, details are not described herein.

According to the troubleshooting device in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

FIG. 10 shows a schematic block diagram of a troubleshooting device 900 according to an embodiment of the present invention. As shown in FIG. 10, the device 900 includes:
a bus 910;
a processor 920 connected to the bus;
a memory 930 connected to the bus; and
a transceiver 940 connected to the bus.

The processor 920 calls, by using the bus, a program stored in the memory 930, so as to be configured to control the transceiver 940 to receive and store an identity that is of an access transfer control function ATCF device accessed by user equipment and that is sent by a first service centralization and continuity application server SCC AS;
configured to control the transceiver 940 to receive a request message that is used to instruct to query the identity of the ATCF and that is sent by a call session control function CSCF device;
configured to query the identity of the ATCF device according to the request message; and
configured to control the transceiver 940 to send the identity of the ATCF device to a second SCC AS, so that the second SCC AS sends an identity of the second SCC AS to the ATCF device according to the identity of the ATCF device, where the second SCC AS is determined by the CSCF device after the CSCF device detects that the first SCC AS becomes faulty.

Optionally, the processor 920 is specifically configured to control the transceiver 940 to receive the identity that is of the access transfer control function ATCF device accessed by the user equipment and that is sent by the first SCC AS and a subscriber identity of the user equipment;
configured to store a mapping relationship between the subscriber identity and the identity of the ATCF device;
configured to control the transceiver 940 to receive the request message that is used to instruct to query the identity of the ATCF and that is sent by the CSCF device, where the request message includes the subscriber identity of the user equipment; and
configured to determine the ATCF device and the identity of the ATCF device according to the subscriber identity and information about a mapping relationship between the subscriber identity and the ATCF device.

Optionally, the processor 920 is specifically configured to control the transceiver 940 to receive the identity that is of the access transfer control function ATCF device accessed by the user equipment and that is sent by the first SCC AS and an identity of the first SCC AS;
configured to store a mapping relationship between the identity of the first SCC AS and the identity of the ATCF device;
configured to control the transceiver 940 to receive the request message that is used to instruct to query the identity of the ATCF and that is sent by the CSCF device, where the request message includes the identity of the first SCC AS; and
configured to determine the ATCF device and the identity of the ATCF device according to the identity of the first SCC AS and information about a mapping relationship between the identity of the first SCC AS and the ATCF device.

Optionally, the processor 920 is specifically configured to control the transceiver 940 to receive the request message that is used to instruct to query the identity of the ATCF and that is sent by the CSCF device by using the second SCC AS.

Optionally, the processor 920 is specifically configured to control the transceiver 940 to receive the request message that is used to instruct to query the identity of the ATCF and that is sent by the CSCF device, where the request message includes the identity of the second SCC AS; and
configured to control the transceiver 940 to send the identity of the ATCF device to the second SCC AS according to the identity of the second SCC AS.

Optionally, the processor 920 is specifically configured to control the transceiver 940 to send a user data answer UDA message to the second SCC AS, where the UDA message includes the identity of the ATCF device and user data of the user equipment.

Optionally, the identity of the ATCF device includes a public service identity PSI of the ATCF device and a path uniform resource identifier Path URI of the ATCF device, and the identity of the second SCC AS includes an access transfer update-session transfer identifier ATU-STI of the second SCC AS.

The processor may also be referred to as a CPU. The memory may include a read-only memory and a random access memory, and provide an instruction and data to the processor. A part of the memory may further include a non-volatile random access memory (NVRAM). In a specific application, the device 900 may be embedded in or may be a network device such as an HSS, and may further include a carrier that accommodates a transmit circuit and a receive circuit, so as to allow the device 900 to perform data transmission and reception with a remote location. The transmit circuit and the receive circuit may be coupled to an antenna. All components of the device 900 are coupled together by using the bus, where the bus may include a power bus, a control bus, and a status signal bus, in addition to a data bus. However, for clarity, various buses are denoted by the bus 910 in the figure. In different specific products, a decoder may be integrated with a processing unit as a whole.

The processor may implement or perform steps and logical block diagrams that are disclosed in the method embodiments of the present invention. The general purpose processor may be a microprocessor, or the processor may be any conventional processor, decoder, or the like. The steps of the methods disclosed with reference to the embodiments of the present invention may be directly completed by a hardware processor, or completed by a combination of hardware and a software module in a decoding processor. The software module may be located in a mature storage medium in the art, such as a random access memory, a flash memory, a read-only memory, a programmable read-only memory, an electrically erasable programmable memory, or a register.

It should be understood that in the embodiments of the present invention, the processor 920 may be a central processing unit (Central Processing Unit, "CPU" for short), or the processor 920 may be another general purpose processor, a digital signal processor (DSP), an application-specific integrated circuit (ASIC), a field programmable gate array (FPGA), or another programmable logic device, discrete gate or transistor logic device, discrete hardware assembly, or the like. The general purpose processor may be a microprocessor, or the processor may be any conventional processor, or the like.

The memory 930 may include a read-only memory and a random access memory, and provide an instruction and data to the processor 920. A part of the memory 930 may further include a non-volatile random access memory. For example, the memory 930 may further store information about a device type.

In addition to a data bus, the bus system 910 may further include a power bus, a control bus, a status signal bus, and the like. However, for clear description, various buses are denoted by the bus system 910 in the figure.

In an implementation process, the steps in the foregoing method may be implemented by using an integrated logic circuit of hardware in the processor 920 or a software-form instruction. The steps of the methods disclosed with reference to the embodiments of the present invention may be directly completed by a hardware processor, or may be completed by a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory 930. The processor 920 reads information in the memory 930, and implements the steps of the foregoing methods in combination with hardware of the processor 920. To avoid repetition, details are not described herein.

The troubleshooting device 900 according to this embodiment of the present invention may correspond to an HSS in a method according to an embodiment of the present invention. In addition, units and modules in the troubleshooting device 900 and the foregoing other operations and/or functions are respectively intended to implement corresponding procedures of the method 300 in FIG. 4. For brevity, details are not described herein.

According to the troubleshooting device in this embodiment of the present invention, related information about an ATCF device accessed by user equipment is stored in an HSS; when a first SCC AS that provides a service for the user equipment becomes faulty, a second SCC AS can obtain the related information about the ATCF device from the HSS, and therefore may instruct the ATCF device to send a handover request to the second SCC AS when handover processing is performed for the user equipment. Therefore, even if the first SCC AS becomes faulty, a handover service can still be provided for the user equipment, so that continuity of a voice service can be ensured, and user experience can be improved.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a specific working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A troubleshooting method, wherein the method comprises:
receiving, by a second SCC AS after a first service centralization and continuity application server SCC AS becomes faulty, an identity that is of an access transfer control function ATCF device accessed by user equipment and that is sent by a home subscriber server HSS, wherein the second SCC AS is determined by a call session control function CSCF device after the CSCF device detects that the first SCC AS becomes faulty;
sending, by the second SCC AS, an identity of the second SCC AS to the ATCF device according to the identity of the ATCF device; and
receiving, by the second SCC AS, a handover request that is sent by the ATCF device according to the identity of the second SCC AS.

2. The method according to claim 1, wherein before the receiving, by a second SCC AS, an identity that is of an ATCF device accessed by user equipment and that is sent by an HSS, the method further comprises:
sending, by the second SCC AS, a user data request UDR message to the HSS, wherein the UDR message comprises a subscriber identity of the user equipment, wherein
the receiving, by a second SCC AS, an identity that is of an ATCF device accessed by user equipment and that is sent by an HSS comprises:
receiving, by the second SCC AS, the identity that is of the ATCF device accessed by the user equipment and that is sent by the HSS, wherein the identity of the ATCF device is sent by the HSS after the HSS determines the ATCF device according to the subscriber identity and information about a mapping relationship between the subscriber identity and the ATCF device.

3. The method according to claim 1, wherein before the receiving, by a second SCC AS, an identity that is of an ATCF device accessed by user equipment and that is sent by an HSS, the method further comprises:
sending, by the second SCC AS, a UDR message to the HSS, wherein the UDR message comprises an identity of the first SCC AS, wherein
the receiving, by a second SCC AS, an identity that is of an ATCF device accessed by user equipment and that is sent by an HSS comprises:
receiving, by the second SCC AS, the identity that is of the ATCF device accessed by the user equipment and that is sent by the HSS, wherein the identity of the ATCF device is sent by the HSS after the HSS determines the ATCF device according to the identity of the first SCC AS and information about a mapping relationship between the identity of the first SCC AS and the ATCF device.

4. The method according to claim 2 or 3, wherein before the receiving, by a second SCC AS, an identity that is of an ATCF device accessed by user equipment and that is sent by an HSS, the method further comprises:
receiving, by the second SCC AS, a notification message that is used to instruct to replace the first SCC AS with the second SCC AS and that is sent by the CSCF device, wherein
the sending, by the second SCC AS, a UDR message to the HSS comprises:
sending, by the second SCC AS, the UDR message to the HSS according to the notification message.

5. The method according to any one of claims 1 to 4, wherein the receiving, by a second SCC AS, an identity that is of an ATCF device accessed by user equipment and that is sent by an HSS comprises:
receiving, by the second SCC AS, a user data answer UDA message sent by the HSS, wherein the UDA message comprises the identity of the ATCF device and user data of the user equipment.

6. The method according to any one of claims 1 to 5, wherein the identity of the ATCF device comprises a public service identity PSI of the ATCF device and a path uniform resource identifier Path URI of the ATCF device, and the identity of the second SCC AS comprises an access transfer update-session transfer identifier ATU-STI of the second SCC AS.

7. A troubleshooting method, wherein the method comprises:
receiving and storing, by a home subscriber server HSS, an identity that is of an access transfer control function ATCF device accessed by user equipment and that is sent by a first service centralization and continuity application server SCC AS;
receiving, by the HSS, a request message that is used to instruct to query the identity of the ATCF device and that is sent by a call session control function CSCF device;
querying, by the HSS, the identity of the ATCF device according to the request message; and
sending, by the HSS, the identity of the ATCF device to a second SCC AS, so that the second SCC AS sends an identity of the second SCC AS to the ATCF device according to the identity of the ATCF device, wherein the second SCC AS is determined by the CSCF device after the CSCF device detects that the first SCC AS becomes faulty.

8. The method according to claim 7, wherein the receiving and storing, by an HSS, an identity that is of an access transfer control function ATCF device accessed by user equipment and that is sent by a first SCC AS comprises:
receiving, by the HSS, the identity that is of the access transfer control function ATCF device accessed by the user equipment and that is sent by the first SCC AS and a subscriber identity of the user equipment; and
storing a mapping relationship between the subscriber identity and the identity of the ATCF device, wherein
the receiving, by the HSS, a request message that is used to instruct to query the identity of the ATCF and that is sent by a CSCF device comprises:
receiving, by the HSS, the request message that is used to instruct to query the identity of the ATCF and that is sent by the CSCF device, wherein the request message comprises the subscriber identity of the user equipment; and
the querying, by the HSS, the identity of the ATCF device according to the request message comprises:
determining, by the HSS, the ATCF device and the identity of the ATCF device according to the subscriber identity and information about a mapping relationship between the subscriber identity and the ATCF device.

9. The method according to claim 7, wherein the receiving and storing, by an HSS, an identity that is of an access transfer control function ATCF device accessed by user equipment and that is sent by a first SCC AS comprises:
receiving, by the HSS, the identity that is of the access transfer control function ATCF device accessed by the user equipment and that is sent by the first SCC AS and an identity of the first SCC AS; and
storing a mapping relationship between the identity of the first SCC AS and the identity of the ATCF device, wherein
the receiving, by the HSS, a request message that is used to instruct to query the identity of the ATCF and that is sent by a CSCF device comprises:
receiving, by the HSS, the request message that is used to instruct to query the identity of the ATCF and that is sent by the CSCF device, wherein the request message comprises the identity of the first SCC AS; and
the querying, by the HSS, the identity of the ATCF device according to the request message comprises:
determining, by the HSS, the ATCF device and the identity of the ATCF device according to the identity of the first SCC AS and information about a mapping relationship between the identity of the first SCC AS and the ATCF device.

10. The method according to any one of claims 7 to 9, wherein the receiving, by the HSS, a request message that is used to instruct to query the identity of the ATCF and that is sent by a CSCF device comprises:
receiving, by the HSS, the request message that is used to instruct to query the identity of the ATCF and that is sent by the CSCF device by using the second SCC AS.

11. The method according to any one of claims 7 to 9, wherein the receiving, by the HSS, a request message that is used to instruct to query the identity of the ATCF and that is sent by a CSCF device comprises:
receiving, by the HSS, the request message that is used to instruct to query the identity of the ATCF and that is sent by the CSCF device, wherein the request message comprises the identity of the second SCC AS, wherein
the sending, by the HSS, the identity of the ATCF device to a second SCC AS comprises:
sending, by the HSS, the identity of the ATCF device to the second SCC AS according to the identity of the second SCC AS.

12. The method according to any one of claims 7 to 11, wherein the sending, by the HSS, the identity of the ATCF device to a second SCC AS comprises:
sending, by the HSS, a user data answer UDA message to the second SCC AS, wherein the UDA message comprises the identity of the ATCF device and user data of the user equipment.

13. The method according to any one of claims 7 to 12, wherein the identity of the ATCF device comprises a public service identity PSI of the ATCF device and a path uniform resource identifier Path URI of the ATCF device, and the identity of the second SCC AS comprises an access transfer update-session transfer identifier ATU-STI of the second SCC AS.

14. A troubleshooting method, wherein the method comprises:
receiving and storing, by a home subscriber server HSS, an identity that is of an access transfer control function ATCF device accessed by user equipment and that is sent by a first service centralization and continuity application server SCC AS;
determining a second SCC AS after a call session control function CSCF device detects that the first SCC AS becomes faulty, and sending, by the CSCF device, a request message that is used to instruct to query the identity of the ATCF device to the HSS;
sending, by the HSS, the identity of the ATCF device to the CSCF device according to the request message;
sending, by the CSCF device, an identity of the second SCC AS to the ATCF device according to the identity of the ATCF device;
receiving, by the CSCF device, a handover request that is sent by the ATCF device according to the identity of the second SCC AS, wherein the handover request carries the identity of the second SCC AS; and
forwarding, by the CSCF device, the handover request to the second SCC AS according to the identity of the second SCC AS.

15. The method according to claim 14, wherein the receiving and storing, by an HSS, an identity that is of an access transfer control function ATCF device accessed by user equipment and that is sent by a first SCC AS comprises:
receiving, by the HSS, the identity that is of the access transfer control function ATCF device accessed by the user equipment and that is sent by the first SCC AS and a subscriber identity of the user equipment; and
storing a mapping relationship between the subscriber identity and the identity of the ATCF device, wherein
the sending, by the CSCF device, a request message that is used to instruct to query the identity of the ATCF device to the HSS comprises:
sending, by the CSCF device, the request message that is used to instruct to query the identity of the ATCF to the HSS, wherein the request message comprises the subscriber identity of the user equipment; and
the sending, by the HSS, the identity of the ATCF device to the CSCF device according to the request message comprises:
determining, by the HSS, the ATCF device and the identity of the ATCF device according to the subscriber identity and information about a mapping relationship between the subscriber identity and the ATCF device, and sending the identity of the ATCF device to the CSCF device.

16. The method according to claim 14, wherein the receiving and storing, by an HSS, an identity that is of an access transfer control function ATCF device accessed by user equipment and that is sent by a first SCC AS comprises:
receiving, by the HSS, the identity that is of the access transfer control function ATCF device accessed by the user equipment and that is sent by the first SCC AS and an identity of the first SCC AS; and
storing a mapping relationship between the identity of the first SCC AS and the identity of the ATCF device, wherein
the sending, by the CSCF device, a request message that is used to instruct to query the identity of the ATCF device to the HSS comprises:
sending, by the CSCF device, the request message that is used to instruct to query the identity of the ATCF to the HSS, wherein the request message comprises the identity of the first SCC AS; and
the sending, by the HSS, the identity of the ATCF device to the CSCF device according to the request message comprises:
determining, by the HSS, the ATCF device and the identity of the ATCF device according to the identity of the first SCC AS and information about a mapping relationship between the identity of the first SCC AS and the ATCF device, and sending the identity of the ATCF device to the CSCF device.

17. The method according to any one of claims 14 to 16, wherein the sending, by the CSCF device, a request message that is used to instruct to query the identity of the ATCF device to the HSS comprises:
sending, by the CSCF device by using the second SCC AS, the request message that is used to instruct to query the identity of the ATCF device to the HSS.

18. The method according to any one of claims 14 to 17, wherein the sending, by the HSS, the identity of the ATCF device to the CSCF device according to the request message comprises:
sending, by the HSS according to the request message, the identity of the ATCF device to the CSCF device by using the second SCC AS.

19. The method according to any one of claims 14 to 18, wherein the CSCF device is an interrogating call session control function I-CSCF device.

20. The method according to any one of claims 14 to 19, wherein the identity of the ATCF device comprises a public service identity PSI of the ATCF device and a path uniform resource identifier Path URI of the ATCF device, and the identity of the second SCC AS comprises an access transfer update-session transfer identifier ATU-STI of the second SCC AS.

21. A troubleshooting apparatus, wherein the apparatus comprises:
a receiving unit, configured to: after a first service centralization and continuity application server SCC AS becomes faulty, receive an identity that is of an access transfer control function ATCF device accessed by user equipment and that is sent by a home subscriber server HSS, wherein the apparatus is determined by a call session control function CSCF device after the CSCF device detects that the first SCC AS becomes faulty; and
a sending unit, configured to send an identity of the apparatus to the ATCF device according to the identity of the ATCF device, wherein
the receiving unit is further configured to receive a handover request that is sent by the ATCF device according to the identity of the apparatus.

22. The apparatus according to claim 21, wherein the sending unit is further configured to send a user data request UDR message to the HSS, wherein the UDR message comprises a subscriber identity of the user equipment; and
the receiving unit is specifically configured to receive the identity that is of the ATCF device accessed by the user equipment and that is sent by the HSS, wherein the identity of the ATCF device is sent by the HSS after the HSS determines the ATCF device according to the subscriber identity and information about a mapping relationship between the subscriber identity and the ATCF device.

23. The apparatus according to claim 21, wherein the sending unit is further configured to send a UDR message to the HSS, wherein the UDR message comprises an identity of the first SCC AS; and
the receiving unit is specifically configured to receive the identity that is of the ATCF device accessed by the user equipment and that is sent by the HSS, wherein the identity of the ATCF device is sent by the HSS after the HSS determines the ATCF device according to the identity of the first SCC AS and information about a mapping relationship between the identity of the first SCC AS and the ATCF device.

24. The apparatus according to claim 22 or 23, wherein the receiving unit is further configured to receive a notification message that is used to instruct to replace the first SCC AS with the apparatus and that is sent by the CSCF device; and
the sending unit is specifically configured to send the UDR message to the HSS according to the notification message.

25. The apparatus according to any one of claims 21 to 24, wherein the receiving unit is specifically configured to receive a user data answer UDA message sent by the HSS, wherein the UDA message comprises the identity of the ATCF device and user data of the user equipment.

26. The apparatus according to any one of claims 21 to 25, wherein the identity of the ATCF device comprises a public service identity PSI of the ATCF device and a path uniform resource identifier Path URI of the ATCF device, and the identity of the apparatus comprises an access transfer update-session transfer identifier ATU-STI of the apparatus.

27. A troubleshooting apparatus, wherein the apparatus comprises:
a receiving unit, configured to receive an identity that is of an access transfer control function ATCF device accessed by user equipment and that is sent by a first service centralization and continuity application server SCC AS;
a storage unit, configured to store the identity of the ATCF device, wherein
the receiving unit is further configured to receive a request message that is used to instruct to query the identity of the ATCF and that is sent by a call session control function CSCF device;
a querying unit, configured to query the identity of the ATCF device according to the request message; and
a sending unit, configured to send the identity of the ATCF device to a second SCC AS, so that the second SCC AS sends an identity of the second SCC AS to the ATCF device according to the identity of the ATCF device, wherein the second SCC AS is determined by the CSCF device after the CSCF device detects that the first SCC AS becomes faulty.

28. The apparatus according to claim 27, wherein
the receiving unit is specifically configured to receive the identity that is of the access transfer control function ATCF device accessed by the user equipment and that is sent by the first SCC AS and a subscriber identity of the user equipment;
the storage unit is specifically configured to store a mapping relationship between the subscriber identity and the identity of the ATCF device;
the receiving unit is specifically configured to receive the request message that is used to instruct to query the identity of the ATCF and that is sent by the CSCF device, wherein the request message comprises the subscriber identity of the user equipment; and
the querying unit is specifically configured to determine the ATCF device and the identity of the ATCF device according to the subscriber identity and information about a mapping relationship between the subscriber identity and the ATCF device.

29. The apparatus according to claim 27, wherein the receiving unit is specifically configured to receive the identity that is of the access transfer control function ATCF device accessed by the user equipment and that is sent by the first SCC AS and an identity of the first SCC AS;
the storage unit is specifically configured to store a mapping relationship between the identity of the first SCC AS and the identity of the ATCF device;
the receiving unit is specifically configured to receive the request message that is used to instruct to query the identity of the ATCF and that is sent by the CSCF device, wherein the request message comprises the identity of the first SCC AS; and
the querying unit is specifically configured to determine the ATCF device and the identity of the ATCF device according to the identity of the first SCC AS and information about a mapping relationship between the identity of the first SCC AS and the ATCF device.

30. The apparatus according to any one of claims 27 to 29, wherein the receiving unit is specifically configured to receive the request message that is used to instruct to query the identity of the ATCF and that is sent by the CSCF device by using the second SCC AS.

31. The apparatus according to any one of claims 27 to 29, wherein the receiving unit is specifically configured to receive the request message that is used to instruct to query the identity of the ATCF and that is sent by the CSCF device, wherein the request message comprises the identity of the second SCC AS; and
the sending unit is specifically configured to send the identity of the ATCF device to the second SCC AS according to the identity of the second SCC AS.

32. The apparatus according to any one of claims 27 to 31, wherein the sending unit is specifically configured to send a user data answer UDA message to the second SCC AS, wherein the UDA message comprises the identity of the ATCF device and user data of the user equipment.

33. The apparatus according to any one of claims 27 to 32, wherein the identity of the ATCF device comprises a public service identity PSI of the ATCF device and a path uniform resource identifier Path URI of the ATCF device, and the identity of the second SCC AS comprises an access transfer update-session transfer identifier ATU-STI of the second SCC AS.

34. A troubleshooting system, wherein the system comprises:
a first service centralization and continuity application server SCC AS, configured to send an identity that is of an access transfer control function ATCF device accessed by user equipment to a home subscriber server HSS;
a call session control function CSCF device, configured to: after detecting that the first SCC AS becomes faulty, determine a second SCC AS, and send a request message that is used to instruct to query the identity of the ATCF device to the HSS; configured to receive the identity of the ATCF device sent by the HSS according to the request message; configured to send an identity of the second SCC AS to the ATCF device according to the identity of the ATCF device; configured to receive a handover request that is sent by the ATCF device according to the identity of the second SCC AS, wherein the handover request carries the identity of the second SCC AS; and configured to forward the handover request to the second SCC AS according to the identity of the second SCC AS;
the HSS, configured to receive and store the identity of the ATCF device, and send, according to the request message, the identity of the ATCF device to the CSCF device; and
the second SCC AS, configured to receive the handover request forwarded by the CSCF device.

35. The system according to claim 34, wherein the HSS is specifically configured to: receive the identity that is of the access transfer control function ATCF device accessed by the user equipment and that is sent by the first SCC AS and a subscriber identity of the user equipment; store a mapping relationship between the subscriber identity and the identity of the ATCF device; receive the request message that is used to instruct to query the identity of the ATCF and that is sent by the CSCF device, wherein the request message comprises the subscriber identity of the user equipment; and determine the ATCF device and the identity of the ATCF device according to the subscriber identity and information about a mapping relationship between the subscriber identity and the ATCF device, and send the identity of the ATCF device to the CSCF device.

36. The apparatus according to claim 34, wherein the HSS is specifically configured to: receive the identity that is of the access transfer control function ATCF device accessed by the user equipment and that is sent by the first SCC AS and an identity of the first SCC AS; store a mapping relationship between the identity of the first SCC AS and the identity of the ATCF device; receive the request message that is used to instruct to query the identity of the ATCF and that is sent by the CSCF device, wherein the request message comprises the identity of the first SCC AS; and determine the ATCF device and the identity of the ATCF device according to the identity of the first SCC AS and information about a mapping relationship between the identity of the first SCC AS and the ATCF device, and send the identity of the ATCF device to the CSCF device.

37. The apparatus according to any one of claims 34 to 36, wherein the CSCF device is specifically configured to send, by using the second SCC AS, the request message that is used to instruct to query the identity of the ATCF device to the HSS.

38. The apparatus according to any one of claims 34 to 37, wherein the HSS is specifically configured to send, according to the request message, the identity of the ATCF device to the CSCF device by using the second SCC AS.

39. The apparatus according to any one of claims 34 to 38, wherein the CSCF device is an interrogating call session control function I-CSCF device.

40. The apparatus according to any one of claims 34 to 39, wherein the identity of the ATCF device comprises a public service identity PSI of the ATCF device and a path uniform resource identifier Path URI of the ATCF device, and the identity of the second SCC AS comprises an access transfer update-session transfer identifier ATU-STI of the second SCC AS.
